(19) Europäisches Patentamt
European Patent Office
Office européen des brevets

(11) EP 0 512 917 B1

(12) # FASCICULE DE BREVET EUROPEEN

(45) Date de publication et mention de la délivrance du brevet:
**29.10.1997 Bulletin 1997/44**

(51) Int. Cl.[6]: **B01J 23/40**, B01J 21/12, B01J 37/08, B01J 21/04

(21) Numéro de dépôt: **92401264.4**

(22) Date de dépôt: **06.05.1992**

(54) **Catalyseur d'oxydation non sélective et son procédé de préparation**
Katalysator für nicht selektive Oxydation und Verfahren zu seiner Herstellung
Catalyst for non selective oxydation and preparation process thereof

(84) Etats contractants désignés:
**AT BE CH DE DK ES GB GR IT LI LU MC NL PT SE**

(30) Priorité: **06.05.1991 FR 9105517**

(43) Date de publication de la demande:
**11.11.1992 Bulletin 1992/46**

(73) Titulaire: **GAZ DE FRANCE**
**75017 Paris (FR)**

(72) Inventeurs:
- **Blanchard, Luc**
**95880 Enghien-Les-Bains (FR)**
- **Briot, Patrick**
**38200 Vienne (FR)**
- **Primet, Michel**
**69140 Rillieux La Pape (FR)**
- **Garbowski, Patrick**
**69100 Villeneurbanne (FR)**

(74) Mandataire: **Beauchamps, Georges et al**
**Cabinet Weinstein**
**20, avenue de Friedland**
**75008 Paris (FR)**

(56) Documents cités:
**EP-A- 0 190 883**
**FR-A- 2 249 852**
**US-A- 4 014 948**
**US-A- 4 064 154**
**US-A- 4 507 401**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 512 917 B1

## Description

La présente invention concerne des catalyseurs d'oxydation non sélective résistant à des températures élevées, un procédé de préparation de ces catalyseurs, et leur utilisation pour la combustion catalytique des hydrocarbures, du monoxyde de carbone, de l'hydrogène ou de leurs mélanges.

La combustion habituellement utilisée dans les procédés de combustion d'hydrocarbures, tel que du méthane, produit des oxydes d'azote $NO_x$, du monoxyde de carbone CO et des imbrûlés. En revanche, la combustion catalytique, dite aussi combustion "sans flamme" produit peu de polluants telle que $NO_x$ et CO. Cette combustion catalytique est, en outre, d'une utilisation plus souple et peut être réalisée dans des atmosphères explosives.

Les catalyseurs couramment utilisés sont constitués d'un support fait d'oxyde de métaux réfractaires de faible surface spécifique, sur lequel est déposé un fin revêtement d'alumine. La présence d'une fine couche d'alumine permet de déposer la phase active, constituée de métaux nobles, dans un état de dispersion élevé.

Mais il s'avère, qu'au cours de l'utilisation de tels catalyseurs à des températures élevées, le catalyseur subit une dégradation, diminuant ainsi les performances catalytiques. Parmi les causes généralement envisagées pour rendre compte de cette détérioration du catalyseur, on peut noter la diminution du nombre de centres actifs liés à une augmentation de la taille des particules métalliques, à cause des température élevées, de la présence d'eau et d'oxygène.

Une autre cause justifiant de la dégradation du catalyseur est une diminution de la surface spécifique de l'alumine, encore appelée frittage, avec sa transformation en la variété alpha. Cette diminution de la surface spécifique peut à la fois conduire à une encapsulation des particules métalliques, ainsi qu'à une exaltation du frittage de la phase active.

Ainsi, afin de limiter cette perte de la surface spécifique de l'alumine, il a été proposé d'ajouter au support, comportant de l'alumine, des stabilisants au cours de la préparation.

Parmi ces stabilisants, on peut citer des éléments tels que des oxydes de terres rares, essentiellement cérium et lanthane, de zirconium, de baryum ou de silicium.

Le silicium est un stabilisant particulièrement efficace. Il a déjà été proposé d'ajouter à l'alumine divers composés à base de silicium afin d'améliorer la stabilité du support en alumine vis-à-vis du frittage thermique. Ainsi, il est connu d'ajouter :

- des composés du type alkoxysilicium, comme décrit dans le brevet américain n° 1 492 274 et dans le brevet français n° 2 249 852,
- un polysiloxane, comme décrit dans la demande de brevet européen n° 190 883,
- un silicate d'ammonium quaternaire, comme décrit dans la demande de brevet européen n° 184 506,
- du silicium sous forme de microbilles de silice colloïdale, comme décrit dans le document W.R. SYMES et E. RASTETTER, 24th International Colloquium on Refractories, Aachen.

Par ailleurs, dans le cadre de la combustion catalytique, il est connu d'introduire un métal noble, du groupe du platine, sur un support en alumine stabilisé par de silicium.

Or, l'introduction de métaux nobles dans un état de dispersion élevé sur un support stabilisé, suppose une forte interaction entre les groupements fonctionnels du support et le précurseur de la phase active. Cette interaction dépend essentiellement de la nature de ces groupements fonctionnels. Dans le cas d'un support en alumine stabilisé, les groupements hydroxyles de la surface du support sont susceptibles de réagir avec des précurseurs de la phase active, afin d'immobiliser cette phase active sur la surface du support.

Par conséquent, l'interaction entre les groupements hydroxyles présents à la surface du support et le précurseur de la surface active est fonction de la nature de ces groupements hydroxyles et de leur caractère acido-basique.

La présente invention a donc pour but d'adapter la nature du précurseur de la phase active, à la réactivité des groupements hydroxyles présents à la surface du support, afin d'améliorer l'interaction entre ces groupements hydroxyles et le précurseur de la phase active.

Ce but est atteint avec le catalyseur selon l'invention qui comporte un support essentiellement à base d'alumine stabilisé par du silicium, et un précurseur de la phase active constitué d'un métal noble M, le catalyseur est caractérisé en ce que ledit précurseur de la phase active est choisi parmi un complexe aminé cationique de formule $[M(NH_3)_4]^{++}$, et l'acide tétrachloropalladique.

Selon d'autres caractéristiques du catalyseur de la présente invention :

le support précité est stabilisé par du tétra-éthoxysilicium ;
le métal noble M est du palladium ou du platine ;
la teneur en métal noble est comprise entre 0,1 % et 1 % en poids ;
la teneur en métal noble est de l'ordre de 0,5 % en poids.

Le catalyseur selon l'invention est obtenu selon un procédé de préparation qui consiste à stabiliser le support essentiellement d'alumine, en au moins une étape, par greffage d'un composé choisi parmi les orthosilicates alkylés,

de sorte que les groupements hydroxyles présents sur la surface de support soient essentiellement constitués de groupements SiOH, et à soumettre ledit support ainsi stabilisé, à un échange cationique avec le complexe aminé.

L'invention vise également l'utilisation du catalyseur ci-dessus pour la combustion d'hydrocarbures, de monoxyde de carbone, d'hydrogène ou de leurs mélanges.

D'autres buts, caractéristiques et avantages de la présente invention apparaîtront plus clairement à la lecture de la description détaillée qui va suivre.

La figure 1 représente l'évolution de l'intensité I de la bande 3730-3745 $cm^{-1}$ des alumines stabilisées par le silicium en fonction de la teneur T en silicium.

La figure 2 représente l'évolution du rapport β des alumines stabilisées par le silicium en fonction de la teneur T en silicium.

La figure 3 représente l'évolution de l'activité catalytique A (en mole de $CH_4$ convertie en dioxyde de carbone par heure et par mole de platine introduit) en fonction de la température de réaction des catalyseurs à base de platine avant vieillissement accéléré.

La figure 4 représente l'évolution de l'activité catalytique A (en mole de $CH_4$ convertie en dioxyde de carbone par heure et par mole de platine introduit) en fonction de la température de réaction des catalyseurs à base de platine après vieillissement accéléré.

La figure 5 indique le rapport R des activités dans l'état vieilli et dans l'état frais, de catalyseurs à base de platine en fonction de la température de réaction.

La figure 6 représente l'évolution de l'activité catalytique A (en mole de $CH_4$ convertie par heure et par mole de palladium introduit) en fonction de la température de réaction des catalyseurs à base de palladium à l'état frais.

La figure 7 représente l'évolution de l'activité catalytique A (en mole de $CH_4$ convertie par heure et par mole de palladium introduit) en fonction de la température de réaction des catalyseurs à base de palladium à l'état vieilli.

La figure 8 représente le rapport R des activités dans l'état vieilli et dans l'état frais de catalyseurs à base de palladium en fonction de la température de réaction.

Les catalyseurs de la présente invention comportent essentiellement un support constitué d'alumine gamma, stabilisé par du silicum, et un précurseur de phase active déposé sur ledit support et constitué d'un métal noble M, ledit précurseur étant du type complexe aminé cationique de formule $[M(NH_3)_4]^{++}$, de l'acide hexachloro-platinique.

A) <u>Préparation du support en alumine stabilisé par du silicium</u>

Le support en alumine stabilisé par du silicium peut être préparé selon le procédé de greffage suivant :

le support en alumine est une alumine de type gamma SCM 129, fabriquée par RHONE-POULENC, et ayant une surface spécifique de 107 $m^2$ /g.

50 g d'alumine de type gamma SCM 129 sont mis en suspension dans 200 ml d'éthanol. Dans cette suspension, on coule un volume d'une solution éthanolique de tétraéthoxysilicium ($Si(OEt)_4$) avec une concentration en tétraéthoxysilicium telle que le support obtenu ait une concentration en silicium comprise entre 1 % et 4 % en poids. Le système alumine, éthanol, tétraéthoxysilicium est maintenu pendant 1 heure, sous agitation à une température de 60°C. L'éthanol est ensuite éliminé par évaporation sous pression réduite. Le solide obtenu est séché à une température de 110°C pendant une nuit, puis calciné sous un flux d'oxygène jusqu'à 500°C avec une montée lente de température de 1°C/min. Pendant cette montée lente, le tétraéthoxysilicium non greffé est éliminé par vaporisation alors que les groupements hydrocarbonés de la partie greffée sont oxydés en eau et dioxyde de carbone.

Ce procédé de greffage permet de greffer en une seule fois jusqu'à 2 % en poids de silicium par rapport à l'alumine. Des teneurs supérieures comprises entre 2 % et 7 % en poids, et plus particulièrement de 3,16 % en poids peuvent être obtenues en réalisant un second greffage de tétraéthoxysilicium sur un support en alumine contenant déjà environ 2 % en poids de silicium, et qui est calciné sous oxygène à 500°C avant le second traitement par le tétraéthoxysilicium.

Une étude faite par spectrométrie infrarouge a permis de déterminer la nature des groupements présents à la surface de support en alumine stabilisé par le silicium.

Un traitement sous vide à 500°C, des supports en alumine, suivi d'une introduction de teneurs croissantes de silicium permet de faire les remarques suivantes, à l'appui des figures 1 et 2.

Sur la figure 2, β représente le rapport intensité de la bande due aux groupes hydroxyles de l'alumine sur l'intensité de la bande due aux groupes hydroxyles de la silice.

La figure 2 montre que l'intensité des bandes OH caractéristiques des groupes hydroxyles de l'alumine diminue avec l'augmentation de la teneur en silicium.

La figure 1 indique que l'intensité des bandes OH caractéristiques des groupes hydroxyles de la silice croît en même temps que la teneur en silicium.

Pour des teneurs en silicium proches de 3 % en poids, le support en alumine stabilisé par le silicium expose une surface essentiellement constituée de groupement SiOH. Ce résultat montre que le greffage du composé tétraéthoxysilicium conduit à la formation d'une monocouche de silice fortement liée à l'alumine sous-jacente.

Ainsi, en accord avec de récentes théories concernant le frittage de l'alumine, le rôle du silicium serait de bloquer la migration d'espèces Al-OH du fait de la dissimulation des défauts de l'alumine à l'eau qui semble être l'agent de frittage le plus efficace.

Des mesures d'absortion de pyridine effectuées par spectrométrie infrarouge montrent que l'introduction de silicium sur une alumine se traduit par l'apparition d'un caractère acide de Brönsted. Les groupes silanols Si-OH créés comportent des protons suffisamment acides pour transformer la pyridine en ion pyridinium.

L'alumine de départ ainsi qu'une silice, ne comportent pas de groupes hydroxyles présentant un caractère acide au sens de Brönsted. Cette observation indique que le greffage de la silice sur la surface de l'alumine modifie profondément les propriétés superficielles de l'alumine, et que la silice ainsi dispersée n'a pas les propriétés habituelles de ce composé.

L'introduction d'un précuseur de la phase active, constitué de métaux nobles, pour la préparation de catalyseurs d'oxydation plus résistants au frittage thermique, doit tenir compte de cette évolution des propriétés du support, et en particulier de l'apparition d'une acidité protonique.

Il a été réalisé une étude de la stabilité thermique d'un support essentiellement en alumine et, d'un support essentiellement en alumine stabilisé par du silicium selon le procédé précédemment décrit.

L'étude de la stabilité thermique du support, encore appelé test de vieillissement, est effectuée en présence d'eau, à haute température et dans les conditions opératoires suivantes :

- masse de support : 3 g
- débit : 10 l/h
- mélange gazeux : air + eau (20 % en volume)
- température : 1220°C
- durée du test : 24 heures.

Cette étude permet de mesurer la surface spécifique et d'observer le type de phases cristallines présent dans des supports en alumine modifié ou non par le silicium.

Le tableau ci-dessous rassemble les résultats expérimentaux :

| % Poids de Silicium | Surface spécifique ($m^2/g$) après test de vieillissement | Phases cristallines observées |
|---|---|---|
| 0 | 4 | $\alpha$ |
| 1,97 $Si/mm^2$ | 8 | + |
| 2,9 $Si/mm^2$ | 30 | + |
| 3,16 $Si/mm^2$ double greffage | 50 | |
| 4,6 $Si/mm^2$ | 44 | |
| 6,85 $Si/mm^2$ double greffage | 51 | |

Par conséquent, l'introduction de quantité croissante de silicium stabilise progressivement le support essentiellement en alumine.

B) <u>Préparation des catalyseurs.</u>

Le support, essentiellement à base d'alumine, stabilisé par le silicium reçoit ensuite le précurseur de la phase active. L'ajout de ce précurseur peut se faire par imprégnation classique ou, par échange cationique.

1) <u>Préparation du catalyseur par imprégnation classique</u>.

Cette préparation est réalisée sur un support essentiellement en alumine SCM129 fabriquée par RHONE-POULENC, et sur le même support stabilisé par 3,16 % en poids de silicium.

20 g de support sont mis en suspension dans environ 200 ml d'eau. Sous agitation, on coule une solution aqueuse de précurseur de la phase active ($H_2PdCl_4$) de manière à obtenir une teneur de l'ordre de 2 % en poids de métal noble.

On maintient l'agitation pendant 12 heures à température ambiante. L'eau est ensuite éliminée sous pression réduite en utilisant un évaporateur rotatif. Les solides ainsi imprégnés sont séchés à 110°C pendant une nuit. Ils sont ensuite calcinés sous azote à 500°C pendant quelques heures puis réduits par un balayage sous hydrogène à la même température.

Par analyse chimique, on obtient les teneurs en métal noble suivantes :

| | |
|---|---|
| $Pt/Al_2O_3$ | : 1,95 % en poids de Pt |
| $Pt/Si\text{-}Al_2O_3$ | : 2,03 % en poids de Pt |
| $Pd/Al_2O_3$ | : 1,98 % en poids de Pd |
| $Pd/Si\text{-}Al_2O_3$ | : 1,80 % en poids de Pd |

où

- $Al_2O_3$ mentionne le support non stablisé
- $Si\text{-}Al_2O_3$ mentionne le support stabilisé à 3,16 % en poids de silicium.

2) Préparation du catalyseur par échange cationique.

La mise en évidence d'une acidité protonique dans le cas d'un support essentiellement en alumine stabilisé par du silicium suggère d'utiliser la mobilité des protons lies aux groupes OH pour réaliser une opération d'échange selon le schéma :

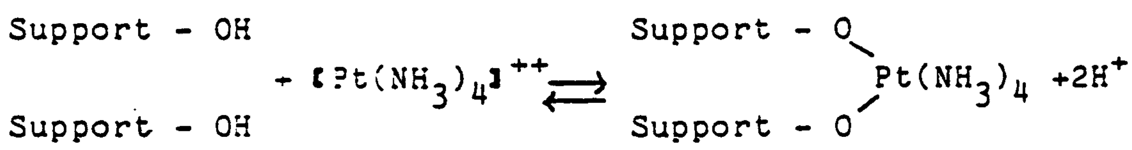

Une estimation semi-quantitative des mesures d'acidité montre que le nombre de groupes hydroxyles acides est relativement faible. Leur nombre ne permet pas de réaliser un échange selon le schéma ci-dessus pour des teneurs en platine ou palladium supérieures à 0,5 % en poids.

Par ailleurs, l'opération d'échange cationique ne peut pas être réalisée dans le cas d'un support essentiellement en alumine non stabilisé par le silicium. En effet, l'alumine pure ne possède pas de groupes hydroxyles ayant un caractère acide selon Brönsted.

Le complexe aminé cationique $[M(NH_3)_4]^{2+}$ où M est du platine ou du palladium, est préparé en dissolvant une masse connue du chlorure correspondant, $MCl_2$, dans de l'ammoniaque concentré au voisinage d'une température de 60°C. Après formation du complexe, la solution ammoniacale est ajoutée goutte à goutte, à température ambiante, à une suspension du solide $Si\text{-}Al_2O_3$ dans de l'ammoniaque concentré. Le système obtenu est maintenu sous agitation pendant quelques heures à la même température. Le solide est ensuite lavé par de l'eau jusqu'à disparition des ions chlorures, et est séché à l'étuve à une température de 110°C pendant une nuit. Les coordinats $NH_3$ du complexe $[M(NH_3)_4]^{++}$ sont ensuite éliminés par une montée lente en température (0,5°C/min) sous balayage d'oxygène à 300°C. La phase active du catalyseur est obtenue par une réduction sous hydrogène à 500°C.

Les teneurs en métal noble du support essentiellement en alumine stabilisé par du silicium sont les suivantes :

| | |
|---|---|
| $Pt/Si\text{-}Al_2O_3$ | : 0,51 % en poids de Pt |
| $Pd/Si\text{-}Al_2O_3$ | : 0,56 % en poids de Pd |

On décrira ci-après les caractéristiques essentielles des catalyseurs d'oxydation selon l'invention comparativement aux catalyseurs conventionnels.

Les catalyseurs préparés selon l'état antérieur de la technique et selon la présente invention sont soumis à un test de vieillissement accéléré destiné à apprécier l'influence d'un frittage thermique en présence d'eau sur leur activité catalytique. Les conditions du test sont les suivantes :

- masse de catalyseur : 3 grammes
- débit des réactifs : 10l/h
- Composition des réactifs en volume : 9 % de méthane dans l'air (mélange stoechiométrique)

- température : 1095°C
- durée : 24 heures

A l'issue du test de vieillissement, une masse de 200 mg de catalyseur vieilli est prélevée afin de mesurer l'activité catalytique.

La mesure de l'activité catalytique du catalyseur est réalisée dans la réaction de combustion du méthane. Les conditions opératoires sont les suivantes :

- Masse de catalyseur : 200 mg
- Débit des réactifs : 6,4 l/h
- Composition des réactifs en volume : $O_2$(4 %), $CH_4$ (1 %), $N_2$ (95 %).

L'activité est mesurée tous les 25°C dans le domaine de température de l'ordre de 250° à 800°C. A chaque température, la durée du test est de l'ordre de 5 heures. L'analyse des produits formés est effectuée par chromatographie en phase gazeuse. L'activité peut être exprimée par le taux de transformation globale (T.T.G.) défini par la relation suivante :

$$T.T.G. = (P_{CO} + P_{CO2} / P_{CO} + P_{CO2} + P_{CH4}) \times 100,$$

où $P_i$ représente la pression partielle du composé "i" dans les gaz sortant du réacteur. L'activité peut être également exprimée, à partir de la valeur du T.T.G., et en tenant compte du débit des réactifs, et de la masse de catalyseur, en mole de méthane transformée en dioxyde de carbone par heure et par gramme de catalyseur. Dans la mesure où tous les catalyseurs n'ont pas la même teneur en métal noble, on peut normer l'activité en l'exprimant en mole de méthane transformée en dioxyde de carbone par heure et par mole de métal noble introduit.

Les activités catalytiques mesurées avant et après le test de vieillissement constituent une mesure de la résistance du catalyseur à un frittage thermique à haute température et en présence d'eau.

On détaillera ci-après certaines caractéristiques des catalyseurs préparés selon l'invention et selon l'art antérieur.

1) <u>Activité catalytique du catalyseur Pt/$Al_2O_3$ (1,95 % en poids de Pt) de l'art antérieur avant et après vieillissement accélé</u>

Les catalyseurs, dont le support essentiellement en alumine est fabriqué par RHONE POULENC et qui est de référence SCM129, sont préparés par imprégnation du support par l'acide hexachloroplatinique ($H_2PtCl_6$).

Pour le catalyseur frais, c'est-à-dire avant vieillissement accéléré, représenté par la courbe 1 de la figure 3, les caractéristiques sont les suivantes :

- L'activité se développe à partir de 300°C, la conversion est totale vers 580°C,
- La température de demi-conversion ou $T_{50}$ est de 480°C.

Pour le catalyseur vieilli de façon accélérée, représenté sur la courbe 1 de la figure 4 les caractéristiques sont les suivantes :

- L'activité est mesurable à partir de 430°C, la conversion est totale vers 720°C,
- La température de demi-conversion, $T_{50}$, est de 570°C,
- On remarque l'absence de monoxyde de carbone,
- La surface spécifique du catalyseur est de $10m^2/g$.

On remarquera à partir de la courbe 1 de la figure 5, qu'à 600°C le catalyseur vieilli de façon accélérée ne conserve que 60 % de l'activité du catalyseur frais.

2) <u>Activité catalytique des catalyseurs Pd/$Al_2O_3$ (1,98 % en poids de Pd) de l'art antérieur avant et après vieillissement accéléré</u>.

Les catalyseurs dont le support essentiellement en alumine est fabriqué par RHONE POULENC et qui est de référence SCM129, sont préparés par imprégnation du support par l'acide tétrachloropalladique ($H_2PdCl_4$).

Pour le catalyseur frais, représenté par la courbe 1 de la figure 6 les caractéristiques sont les suivantes :

- L'activité est mesurable à partir de 340°C, et la conversion est totale vers 520°C,
- La température de demi-conversion, $T_{50}$, est de 430°C.

Pour le catalyseur vieilli de façon accélérée, représenté par la courbe 1 de la figure 7, les caractéristiques sont les suivantes :

- L'activité est mesurable à partir de 300°C, et la conversion est totale vers 700°C,
- La température de demi-conversion, $T_{50}$ est de 460°C.

La surface spécifique est de $11m^2/g$.

A partir de la courbe 1 de la figure 8, on remarque qu'à 600°C, le catalyseur à l'état vieilli conserve environ 90 % de l'activité du catalyseur frais. La désactivation est moins sévère que dans le cas d'une phase active à base de platine déposée sur le même support.

3) Activité catalytique des catalyseurs Pt/Si-$Al_2O_3$ (2,03 % en poids de Pt) selon l'invention, avant et après vieillissement accéléré.

On obtient la phase active des catalyseurs ayant un support essentiellement en alumine stabilisé par 3,16 % en poids de silicium, par imprégnation classique au moyen d'acide hexachloroplatinique ($H_2PtCl_6$).

Les caractéristiques essentielles du catalyseur frais représentées par la courbe 2 de la figure 3, sont les suivantes :

- L'activité est mesurable à partir de 300°C, la conversion est totale au voisinage de 600°C,
- La température de demi-conversion $T_{50}$ est de 450°C.

Selon la figure 4, les caractéristiques essentielles du catalyseur vieilli, représentées par la courbe 2 sont les suivantes :

- L'activité est mesurable à partir de 450°C et la conversion est totale vers 750°C,
- La température de demi-conversion $T_{50}$ est de 590°C,
- On n'observe pas la formation de monoxyde de carbone,
- La surface spécifique est de $75m^2/g$.

Selon la courbe 2 de la figure 5, à 600°C, l'activité du catalyseur vieilli de façon accélérée ne représente que 55 % de l'activité du catalyseur non vieilli.

4) Activité catalytique des catalyseurs Pt/Si-$Al_2O_3$ (0,51 % en poids de Pt) selon l'invention avant et après vieillissement accéléré.

On obtient la phase active des catalyseurs ayant un support essentiellement en alumine stabilisé par 3,16 % de silicium par un échange cationique en utilisant le complexe $[Pt(NH_3)_4]^{++}$.

Selon la courbe 3 de la figure 3, les caractéristiques essentielles du catalyseur frais sont les suivantes :

- L'activité est mesurable à partir de 250°C et la conversion est totale vers 650°C,
- La température de demi-conversion $T_{50}$ est de 500°C.

Ce catalyseur est le plus actif des solides préparés à base de platine. L'activité par gramme de catalyseur est comparable à celle des autres systèmes, bien que la teneur en platine soit 3 à 4 fois plus faible.

Selon la courbe 3 de la figure 4, les catalyseurs vieillis ont les caractéristiques suivantes :

- L'activité est mesurable à partir de 400°C, et la conversion est totale vers 750°C,
- La température de demi-conversion $T_{50}$ est de 612°C,
- La surface spécifique est de $75m^2/g$.

Selon la courbe 3 de la figure 5, à 600°C, par exemple une activité correspondant à 40 % de celle du catalyseur initial est maintenue.

5) Activité catalytique du catalyseur Pd/Si-$Al_2O_3$ (1,80 % en poids de Pd) selon l'invention, avant et après vieillissement accéléré.

On obtient la phase active des catalyseurs ayant un support essentiellement d'alumine stablisé par 3,16 % de silicium par imprégnation classique au moyen d'acide tétrachloropalladique ($H_2PdCl_4$).

Selon la courbe 2 de la figure 6, les catalyseurs ont les caractéristiques suivantes :

- L'activité est mesurable à partir de 250°C, la conversion est totale au voisinage de 480°C,
- La température de demi-conversion $T_{50}$ est de 360°C.

Le catalyseur Pd/Si-$Al_2O_3$ est nettement plus actif dans tous les domaines de température étudiés que le système connu Pd/$Al_2O_3$ utilisant le même précurseur de la phase active.

Selon la courbe 2 de la figure 7, le catalyseur vieilli a les caractéristiques suivantes :

- L'activité est mesurable à partir de 250°C, et la conversion est totale au voisinage de 650°C,
- La température de demi-conversion $T_{50}$ est de 440°C,
- La surface spécifique est de $75m^2/g$.

L'activité du catalyseur est supérieure à celle du système connu Pd/$Al_2O_3$ utilisant le même précurseur de la phase active.

Selon la courbe 2 de la figure 8, à 600°C, par exemple, le catalyseur vieilli maintient une activité égale à celle du catalyseur frais. Le vieillissement accéléré n'a pas d'effet sur l'activité catalytique à cette température.

Le catalyseur réalise l'oxydation du méthane en conduisant exclusivement à la formation de dioxyde de carbone (absence du monoxyde de carbone) que ce soit à l'état vieilli ou non.

6) Activité catalytique des catalyseurs Pd/Si-$Al_2O_3$ (0,56 % en poids de Pd) selon l'invention avant et après vieillissement accéléré.

On obtient la phase active les catalyseurs ayant un support essentiellement d'alumine stabilisé par 3,16 % de silicium par un échange cationique en utilisant le complexe $[Pd(NH_3)_4]^{++}$.

Selon la courbe 3 de la figure 6, les caractéristiques essentielles du catalyseur frais sont les suivantes :

- L'activité est mesurable à partir de 250°C, et la conversion est totale vers 550°C,
- La température de demi-conversion $T_{50}$ est de 380°C.

L'activité par mole (ou par gramme) de méthane introduit vaut environ 3 ou 4 fois celle des autres catalyseurs préparés à base de palladium. Il en résulte que l'activité de ce catalyseur par gramme de solide est comparable à celle des autres systèmes bien que la teneur en métal soit 3 à 4 fois plus faible.

Selon la courbe 3 de la figure 7, les catalyseurs vieillis ont les caractéristiques suivantes :

- La réaction démarre vers 250°C, et la demi-conversion ($T_{50}$) est obtenue à une température de 580°C,
- La surface spécifique est de $75m^2/g$.

Ce solide est le plus actif des catalyseurs vieillis. Selon la courbe 3 de la figure 8 à 600°C, par exemple, une activité égale à 50 % de l'activité initiale est maintenue.

Tous les catalyseurs préparés selon la présente invention réalisent l'oxydation du méthane sans dégager de monoxyde de carbone qu'il soit à l'état vieilli ou non.

Comme cela ressort de ce qui précède, les catalyseurs de la présente invention présentent un gain d'activité surtout perceptible aux basses températures de réaction, même si les catalyseurs, utilisant comme support de l'alumine stabilisée par du silicium, n'ont pas une tenue thermique améliorée dans tout le domaine de température à l'issue du test de vieillissement.

Ce gain d'activité du catalyseur selon l'invention entraîne une durée de vie augmentée par rapport aux catalyseurs conventionnels, constitués d'un support d'alumine non stabilisé par du silicium et sur lequel est déposé la phase active.

Les catalyseurs selon l'invention permettent de réaliser une économie en métaux nobles et la possibilité d'abaisser la teneur en palladium et platine pour une activité catalytique, par gramme de catalyseur, comparable à celle des catalyseurs connus.

Bien entendu, l'invention n'est nullement limitée aux modes de réalisation décrits qui ne sont donnés qu'à titre illustratif.

**Revendications**

1. Catalyseur d'oxydation non sélective comprenant un support à base d'alumine, stabilisée thermiquement par du silicium, et une phase active constituée d'un métal noble, caractérisé en ce que le précurseur de la phase active est un complexe aminé cationique du type $[M(NH_3)_4]^{++}$.

2. Catalyseur selon la revendication 1, caractérisé en ce que le support précité est stabilisé par du tétraxéthoxysilicium.

3. Catalyseur selon la revendication 1, caractérisé en ce que le métal noble M est du palladium ou du platine.

4. Catalyseur selon la revendication 1 ou 2, caractérisé en ce que la teneur en métal noble est comprise entre 0,1% et 1% en poids.

5. Catalyseur selon la revendication 4, caractérisé en ce que la teneur en métal noble est de l'ordre de 0,5% en poids.

6. Procédé de préparation du catalyseur selon l'une quelconque des revendications 1 à 5, caractérisé en ce qu'il comprend les deux étapes suivantes :

   a) stabilisation du support constitué d'alumine, en au moins une étape, par greffage d'un composé choisi parmi les orthosilicates alkylés, de sorte que les groupements hydroxyles présents sur la surface du support soient constitués de groupement SiOH, et

   b) soumission dudit support ainsi stabilisé à un échange cationique avec un complexe aminé cationique.

7. Utilisation du catalyseur selon l'une des revendications 1 à 5 pour réaliser la combustion d'hydrocarbures, de monoxyde de carbone, d'hydrogène ou de leurs mélanges.

**Claims**

1. Non selective oxydation catalyst comprising an alumina-based support thermally stabilized by silicon and an active phase consisting of a noble metal, characterized in that the precursor of the active phase is a cationic amino-complex of the type $[M(NH_3)_4]^{++}$.

2. Catalyst according to claim 1, characterized in that the aforesaid support is stabilized by tetraxethoxysilicon.

3. Catalyst according to claim 1, characterized in that the noble metal M is palladium or platinum.

4. Catalyst according to claim 1 or 2, characterized in that the noble metal content is lying between 0.1% and 1% by weight.

5. Catalyst according to claim 4, characterized in that the noble metal content is of the order of 0.5% by weight.

6. Method of preparation of the catalyst according to any one of claims 1 to 5, characterized in that it comprises the two following steps :

   a) stabilization of the support consisting of alumina in at least one step by grafting a compound selected among the alkylated orthosilicates, so that the hydroxyle groups present on the surface of the support consist of SiOH group, and

   b) subjecting the said support thus stabilized to a cationic exchange with a cationic amino-complex.

7. Utilization of the catalyst according to one of claims 1 to 5 for carrying out the combustion of hydrocarbons, of carbonmonoxide, of hydrogen or of their mixtures.

**Patentansprüche**

1. Katalysator für nicht selektive Oxydation mit einem durch Silizium stabilisierten aluminiumoxidbasischen Träger und einer aus einem Edelmetall bestehenden aktiven Phase, dadurch gekennzeichnet, daß der Zwischenstoff der aktiven Phase ein kationischer Aminokomplex der Gattung $[M(NH_3)_4]^{++}$ ist.

2. Katalysator nach Anspruch 1, dadurch gekennzeichnet, daß der vorgenannte Träger durch Tetraxethoxysilizium stabilisiert wird.

3. Katalysator gemäß Anspruch 1, dadurch gekennzeichnet, daß das Edelmetall M Palladium oder Platin ist.

**4.** Katalysator nach Anspruch 1 oder 2, dadurch gekennzeichnet, daß der Edelmetallgehalt zwischen 0,1 Gewichtsprozent und 1 Gewichtsprozent liegt.

**5.** Katalysator gemäß Anspruch 4, dadurch gekennzeichnet, daß der Edelmetallgehalt der Größenordnung von 0,5 Gewichtsprozent ist.

**6.** Verfahren zur Vorbereitung des Katalysators gemäß irgendeinem der Ansprüche 1 bis 5, dadurch gekennzeichnet, daß es die zwei folgenden Schritte umfaßt :

a) Stabilisierung des aus Aluminiumoxid bestehenden Trägers in wenigstens einem Schritt durch Pfropfen einer unter alkylierten Orthosilikaten gewählten Verbindung, so daß die an der Oberfläche des Trägers vorhandenen Hydroxylgruppen aus SiOH-Gruppen bestehen, und
b) Unterwerfung des besagten derart stabilisierten Trägers einem kationischen Austausch mit einem kationischen Aminokomplex.

**7.** Verwendung des Katalysators gemäß einem der Ansprüche 1 bis 5 zur Durchführung der Verbrennung von Kohlenwasserstoffen, Kohlenmonoxid, Wasserstoff oder deren Gemischen.

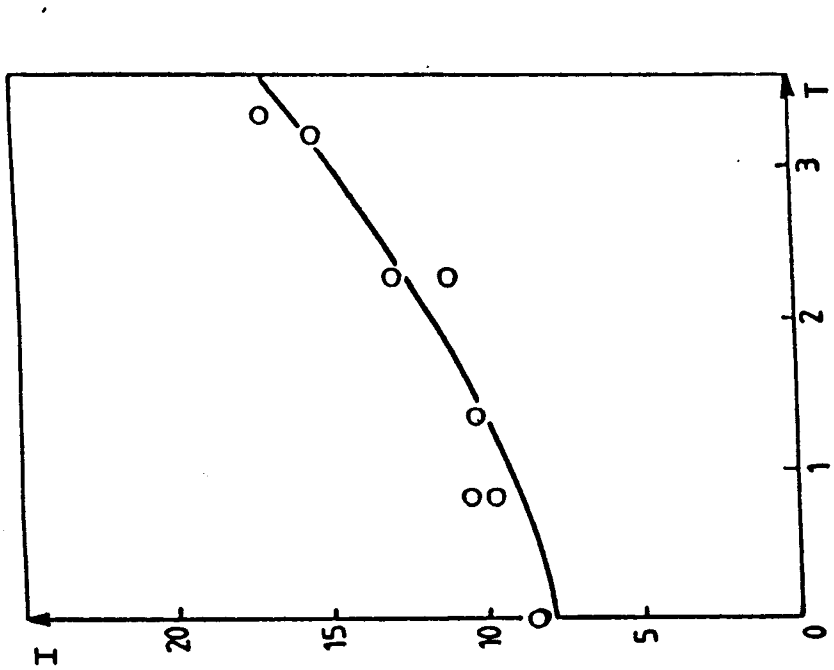


Fig. 1

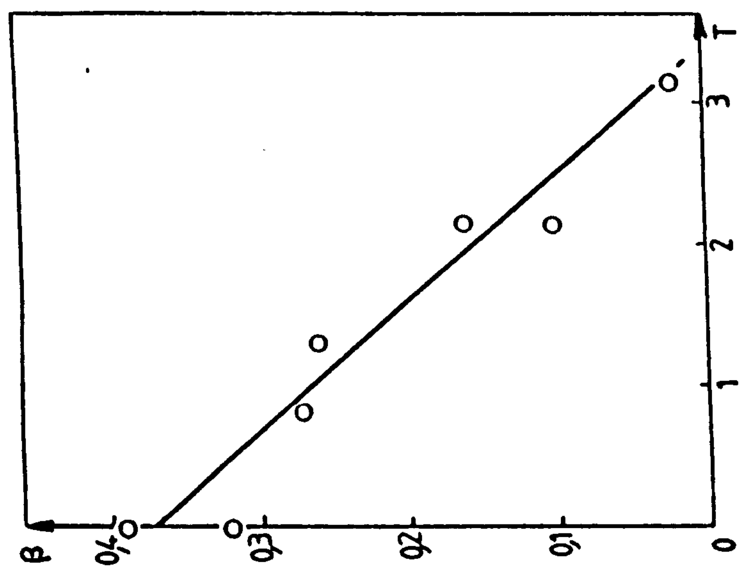


Fig. 2

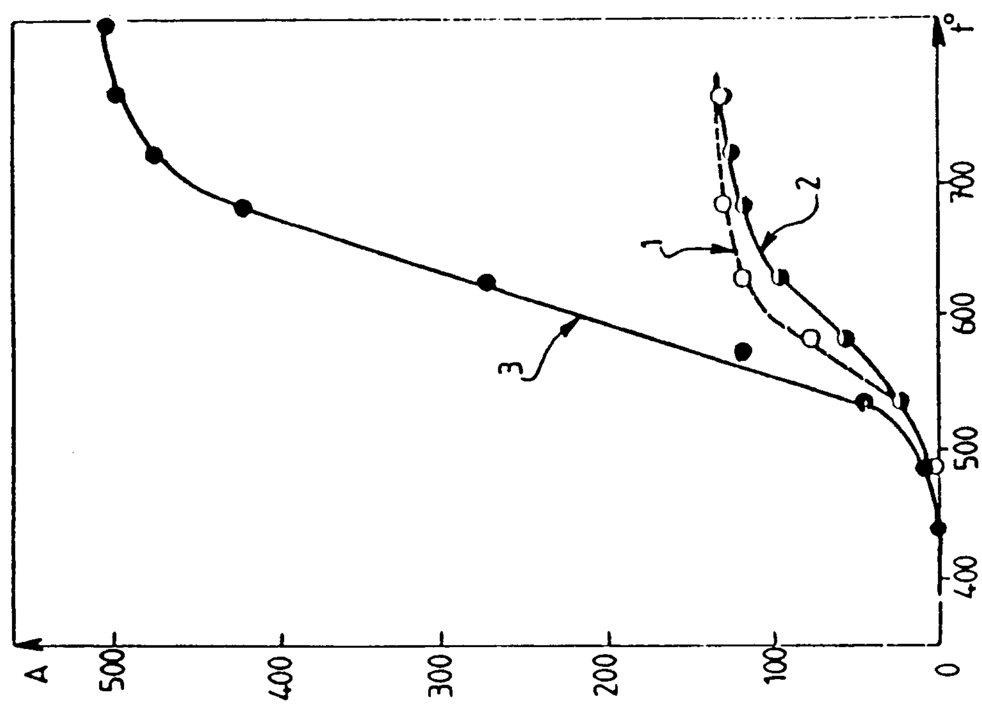
A
500
400
300
200
100
0
400
500
600
700
t°
1
2
3

Fig. 4

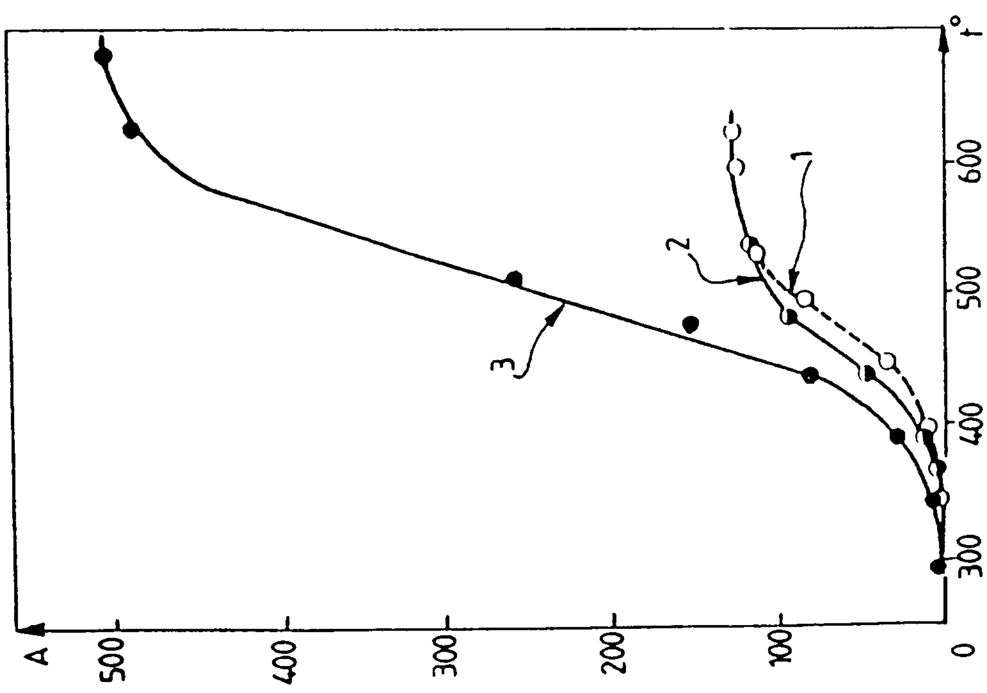
A
500
400
300
200
100
0
300
400
500
600
t°
1
2
3

Fig. 3

Fig.5

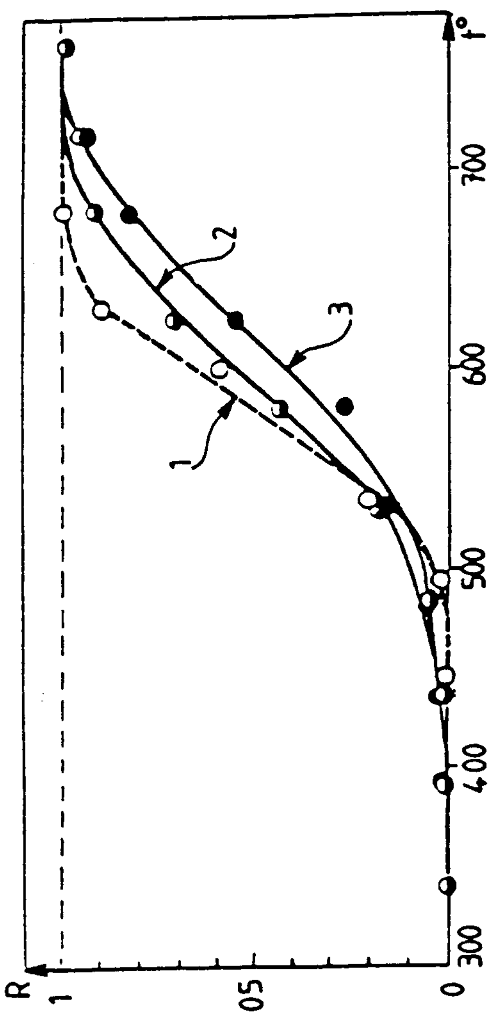


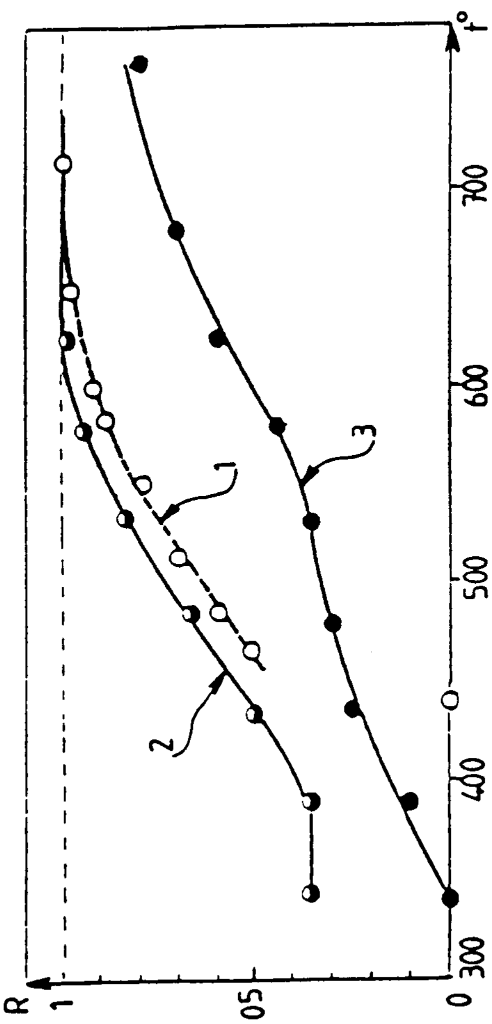


Fig.8

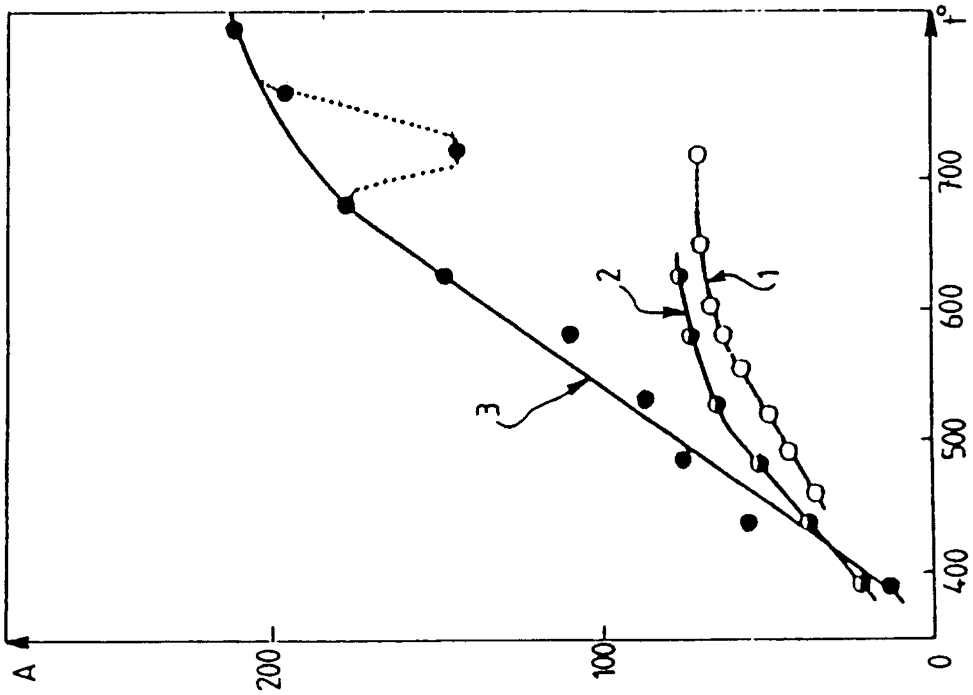


FIG. 7

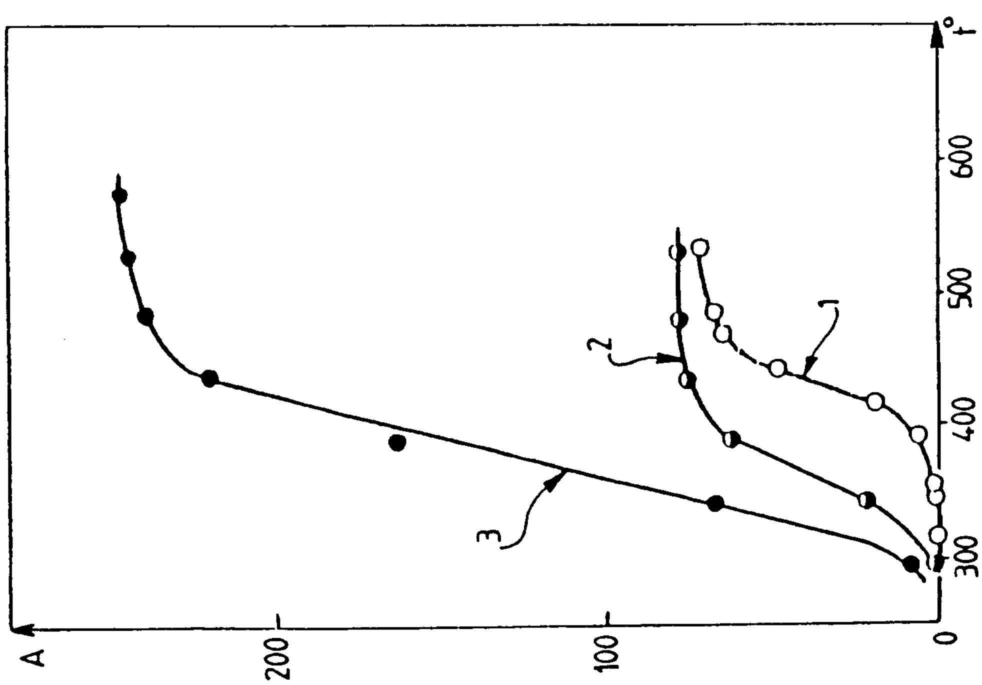


FIG. 6